# EUROPÄISCHE PATENTSCHRIFT

(11) **EP 1 593 536 B1**
(45) Veröffentlichungstag und Bekanntmachung des Hinweises auf die Patenterteilung: **29.10.2008**
(21) Anmeldenummer: 05009297.2
(22) Anmeldetag: 28.04.2005
(51) Int. Cl.: B60H 1/00

(54) **Vorrichtung und Verfahren zum Trennen von Fluidströmen in einer Heizeinrichtung**
Method of and arrangement for separating fluid streams in a heating device
Procédé et dispositif pour séparer l'écoulement de fluides dans un dispositif de chauffage

(30) Priorität: 03.05.2004 DE 202004007039 U
(43) Veröffentlichungstag der Anmeldung: 09.11.2005
(73) Patentinhaber: Eichenauer Heizelemente GmbH & Co. KG, 76870 Kandel (DE); Beru AG, 71636 Ludwigsburg (DE)
(72) Erfinder: Hamburger, Andreas, 76726 Germersheim (DE); Dörrie, Christian, 76863 Herxheim (DE)
(74) Vertreter: Lenz, Steffen

(56) Entgegenhaltungen:
- EP-A- 0 768 197
- EP-A- 1 507 126
- DE-A1- 19 755 698
- DE-C1- 10 250 287
- US-A- 5 057 672
- US-A- 5 775 407
- US-B1- 6 472 645

## Beschreibung

Die Erfindung betrifft eine Vorrichtung zum Trennen von Fluidströmen in einer Heizeinrichtung, insbesondere zum Erwärmen des Innenraums eines Kraftfahrzeugs, wobei die Heizeinrichtung zumindest einen mit einer Mehrzahl an lamellenartigen Wärmeabgabeelementen ausgerüsteten Heizkörper aufweist.

In der Kfz-Industrie besteht zunehmend Bedarf an Heizungskonzepten, bei denen sich aufgrund einer getrennten Luftführung (Umluft oder Frischluft) getrennte Heizzonen im Innenraum eines Kraftfahrzeugs (beispielsweise auf der Fahrer- und Beifahrerseite) realisieren lassen.

Derartige Heizeinrichtungen weisen heutzutage regelmäßig elektrische Zusatz-Heizkörper, vorzugsweise unter Verwendung von PTC-Heizwiderständen auf, die gemeinsam mit einer herkömmlichen Wärmequelle in einem Luftstrom zum Fahrgastinnenraum des Kraftfahrzeugs angeordnet sind. Die genannten Zusatz-Heizkörper weisen in der Regel eine Anordnung paralleler, lamellenartiger Wärmeabgabeelemente auf, die beispielsweise klemmend an einem oder mehreren, z.B. mittels PTC-Elementen beheizten Rohren, insbesondere Profilrohren, sitzen und in gut wärmeleitender Verbindung mit den PTC-Heizwiderständen stehen, wobei sie vom Luftstrom durch die Heizeinrichtung zwecks Wärmeübertrag an denselben umströmt werden (EP 1 507 126 A2). Darüber hinaus ist es gebräuchlich, im Wesentlichen sinusförmige, lamellenartige Wärmeabgabeelemente einzusetzen, welche derart an z.B. ebenfalls mittels PTC-Elementen beheizten Rohr- oder Rahmenelementen angeordnet sind, dass eine gut wärmeleitende Verbindung sichergestellt ist und die Wärme von den Wärmeabgabeelementen an einen sie umströmenden, zu erwärmenden Luftstrom abgegeben wird (EP 1 061 776 A1, US 5 057 672 A).

Die US 5,775,407 zeigt eine Vorrichtung nach dem Oberbegriff des Anspruchs 1.

Zum Erreichen geteilter Heizzonen im Fahrgastinnenraum des Kraftfahrzeugs kann die Luftführung durch die Heizeinrichtung von vorne herein durch entsprechende Trennwände in mehrere Fluidströme unterteilt erfolgen.

Der Erfindung liegt die Aufgabe zugrunde, eine kostengünstige und einfach zu montierende Vorrichtung zum Einsatz in den vorstehend beschriebenen Heizeinrichtungen zu schaffen, mit der sich insbesondere stromabwärts eines Lamellen-Zusatzheizkörpers eine Trennung von Fluidströmen erreichen bzw. aufrecht erhalten lässt.

Diese Aufgabe wird erfindungsgemäß gelöst durch eine Vorrichtung zum Trennen von Fluidströmen in einer Heizeinrichtung, insbesondere zum Erwärmen des Innenraums eines Kraftfahrzeugs, wobei die Heizeinrichtung zumindest einen mit einer Mehrzahl an lamellenartigen Wärmeabgabeelementen ausgerüsteten Heizkörper aufweist, mit einem im Wesentlichen plattenförmigen Trennkörper, der einen Durchbruch mit einer zum Aufschieben des Trennkörpers auf den mit den lamellenartigen Wärmeabgabeelementen bestückten Heizkörper angepassten Kontur aufweist.

Die Erfindung ermöglicht somit eine einfache und kostengünstige, getrennte Fluidführung bei einem gattungsgemäßen, mit einer Mehrzahl an lamellenartigen Wärmeabgabeelementen bestückten Heizkörper, beispielsweise für Umluft und Frischluft und/oder für Fahrer und Beifahrer in einem Kraftfahrzeug, wobei sowohl stromauf als auch stromab des Heizkörpers zwei getrennte Fluidströme gebildet sind. Es sei an dieser Stelle darauf hingewiesen, dass mit "lamellenartige Wärmeabgabeelemente" sowohl solche Elemente angesprochen sind, die in im Wesentlichen paralleler Reihung auf einem oder mehreren Rohren des Heizkörpers sitzen und dort z.B. im Klemmsitz gehalten sind, wie es beispielsweise aus der eingangs erwähnten EP 1 507 126 A2 bekannt ist, als auch solche Elemente, die eine im Wesentlichen sinusförmige Ausgestaltung nach Art eines Wellbleches mit endlicher Breite besitzen und gleichfalls mit Rohr- oder Rahmenelementen des Heizkörpers in wärmeleitender Verbindung stehen, wie sie beispielsweise aus den ebenfalls oben zitierten EP 1 061 776 A1 und US 5 057 672 A bekannt sind.

Vorzugsweise ist dabei aufgrund der Strömungsgeometrie durch die Heizeinrichtung vorgesehen, dass eine Plattenebene des Trennkörpers im aufgeschobenen Zustand im Wesentlichen senkrecht zur Erstreckungsrichtung des Heizkörpers bzw. des oder der Rohre(s) desselben angeordnet ist. Im Falle einer Mehrzahl an parallel angeordneten, lamellenartigen Wärmeabgabeelementen des Heizkörpers, z.B. von weitgehend plättchenförmiger Gestalt, ist somit vorzugsweise eine Plattenebene des Trennkörpers im aufgeschobenen Zustand im Wesentlichen parallel zu einer Längskante der Wärmeabgabeelemente angeordnet, während im Falle von im Wesentlichen sinusförmigen, lamellenartigen Wärmeabgabeelementen eine Plattenebene des Trennkörpers vorzugsweise senkrecht zur Ebene des sinusförmigen Verlaufs des Wärmeabgabeelementes, also in Richtung der Breite desselben zwischen seinen sinusförmig gewellten Rändern, angeordnet ist.

Um ein einfaches Aufschieben des Trennkörpers auf den Heizkörper zu ermöglichen, sieht eine Weiterbildung der erfindungsgemäßen Vorrichtung vor, dass der Durchbruch im Wesentlichen einer Länge und Breite der Wärmeabgabeelemente entsprechende Abmessungen aufweist.

Es kann weiterhin insbesondere von Vorteil sein, wenn der Durchbruch um seinen gesamten Umfang der Außenkontur der Wärmeabgabeelemente im Wesentlichen gasdicht anliegt, so dass keine zusätzlichen Dichtungen zwischen dem Heizkörper bzw. dessen lamellenartigen Wärmeabgabeelementen und dem Trennkörper erforderlich sind. Indes kann selbstverständlich auch je nach Anwendungsfall eine Dichtung, wie z.B. eine Ringdichtung, vorgesehen sein, welche den Trennkörper zumindest über einen Teil des Umfangs seines Durchbruches gegen die lamellenartigen Wärmeabgabeelemente des Heizkörpers abdichtet.

Da sich die Wärmeabgabeelemente des Heizkörpers aufgrund dessen Heizleistung stark erwärmen können, ist der Trennkörper vorzugsweise in einem hitzebeständigen Material ausgebildet, wobei es sich um ein Kunststoffmaterial handeln kann. Weiterhin weist das Material des Trennkörpers in einer äußerst bevorzugten Weiterbildung der erfindungsgemäßen Vorrichtung eine ausweichende Flexibilität auf, um zumindest den Durchbruch zum Aufschieben auf den mit den lamellenartigen Wärmeabgabeelementen bestückten Heizkörper reversibel weiten zu können, so dass der Trennkörper anschließend im Klemmsitz auf den Wärmeabgabeelementen des Heizkörpers gehalten ist.

Um die Halteeigenschaften des Trennkörpers auf dem Heizkörper weiter zu verbessern, ist in bevorzugter Ausführung vorgesehen, dass der Trennkörper zumindest im Bereich seines Durchbruches eine hinreichende Dicke aufweist, dass er mit wenigstens zwei, insbesondere mit wenigstens drei, benachbart angeordneten, lamellenartigen Wärmeabgabeelementen oder mit wenigstens zwei, insbesondere drei, benachbarten Umbiegungen wenigstens eines im Wesentlichen sinusförmigen, lamellenartigen Wärmeabgabeelementes in Kontakt steht, so dass sich eine Mehrzahl an Kontaktstellen mit den lamellenartigen Wärmeabgabeelementen ergibt.

Dabei kann eine erfindungsgemäße Vorrichtung zusätzlich Vorsprünge an der den Durchbruch definierenden Innenwand des Trennkörpers aufweisen, welche in den Zwischenraum zwischen wenigstens zwei benachbarten, im Wesentlichen parallel angeordneten, lamellenartigen Wärmeabgabeelementen oder in den Zwischenraum zwischen wenigstens zwei benachbarten Umbiegungen wenigstens eines im Wesentlichen sinusförmigen, lamellenartigen Wärmeabgabeelementes in Eingriff bringbar sind. Auf diese Weise ist infolge eines Verhakens oder Verrastens der Vorsprünge zwischen dem/den Wärmeabgabeelement(en) eine einwandfreie, insbesondere gegen Verlagerung des Trennkörpers in Axialrichtung eines Rohres des Heizkörpers gesicherte Fixierung des Trennkörpers an dem mit den lamellenartigen Wärmeabgabeelementen bestückten Heizkörper gegeben. Weist die Vorrichtung somit insbesondere eine Mehrzahl an im Wesentlichen parallel angeordneten, lamellenartigen Wärmeabgabeelementen auf, so kann die erfindungsgemäße Vorrichtung vorzugsweise Vorsprünge an wenigstens einer sich parallel zu den Längskanten der Wärmeabgabeelemente erstreckenden, den Durchbruch definierenden Innenwand des Trennkörpers besitzen, die zum Halten des Trennkörpers in einer Richtung senkrecht zur Ausrichtung der lamellenartigen Wärmeabgabeelemente durch Eingreifen jeweils in einen Zwischenraum zwischen den Wärmeabgabeelementen ausgebildet sind. Erfindungsgemäß haken sich demnach die Vorsprünge zwischen den einzelnen Wärmeabgabeelementen ein, so dass sich der Trennkörper in seinem ursprünglichen, ungeweiteten Zustand nicht mehr ohne weiteres verschieben lässt.

Zum Erzielen einer optimalen Trennwirkung ist der Trennkörper erfindungsgemäß vorzugsweise stromabwärts einer weiteren Heizeinheit der Heizeinrichtung, wie einem Wärmetauscher in Verbindung mit dem Kühlwasserkreis eines Kraftfahrzeugs, angeordnet.

Um einen einfachen und aus strömungstechnischer Sicht günstigen Einbau des Trennkörpers zu ermöglichen, sieht eine weitere Variante der erfindungsgemäßen Vorrichtung vor, dass eine äußere Kontur des Trennkörpers entsprechend einer Aufnahme in einem Halteteil für den Trennkörper und gegebenenfalls die weitere Heizeinheit ausgebildet ist. Gemäß einer äußerst bevorzugten Weiterbildung der erfindungsgemäßen Vorrichtung ist dabei vorgesehen, dass eine äußere Kontur des Trennkörpers im Wesentlichen rechteckig mit zwei abgerundeten, eine Längsseite des Kontur-Rechtecks definierenden Ecken ausgebildet ist. Aus Stabilitätsgründen kann der Trennkörper ferner ein umlaufendes, doppelt H-förmiges Querschnittsprofil aufweisen, dessen parallele Schenkel die äußere Kontur bzw. den Durchbruch definierende Innenwände des Trennkörpers bilden.

Zur Lösung des der Erfindung zugrunde liegenden Problems betrifft die Erfindung auch ein Verfahren zum Trennen von Fluidströmen in einer Heizeinrichtung mit wenigstens einem, mit einer Mehrzahl an lamellenartigen Wärmeabgabeelementen ausgerüsteten Heizkörper, insbesondere zum Erwärmen des Innenraums eines Kraftfahrzeugs, wobei ein im Wesentlichen plattenförmiger Trennkörper mit einem vorzugsweise im Wesentlichen zentralen Durchbruch auf den mit den lamellenartigen Wärmeabgabeelementen bestückten Heizkörper aufgeschoben wird.

Dabei sieht eine bevorzugte Ausführungsform des Verfahrens vor, dass der Trennkörper derart auf den mit den lamellenartigen Wärmeabgabeelementen bestückten Heizkörper aufgeschoben wird, dass er im aufgeschobenen Zustand im Wesentlichen senkrecht zur Erstreckungsrichtung des Heizkörpers - bzw. wenigstens eines (Profil)rohres desselben - an geordnet ist und/oder dass er sich - sofern insbesondere eine Mehrzahl an im Wesentlichen parallel angeordneten Wärmeabgabeelementen vorgesehen ist - mit seiner Plattenebene im Wesentlichen parallel zu den Längskanten der Wärmeabgabeelemente erstreckt.

Der Trennkörper kann zum Aufschieben auf den mit den lamellenartigen Wärmeabgabeelementen bestückten Heizkörper vorzugsweise reversibel verformt werden, insbesondere durch Aufweiten des Durchbruchs.

Um für einen einwandfreien Sitz des Trennkörpers auf dem Heizkörper zu sorgen, kann ferner vorgesehen sein, dass Vorsprünge an einer den Durchbruch definierenden Innenwand des Trennkörpers in den Zwischenraum zwischen wenigstens zwei - vorzugsweise wenigstens drei - benachbarten, im Wesentlichen parallel angeordneten, lamellenartigen Wärmeabgabeelementen oder in den Zwischenraum zwischen wenigstens zwei - vorzugsweise wenigstens drei - benachbarten Umbiegungen wenigstens eines im Wesentlichen sinusförmigen, lamellenartigen Wärmeabgabeelementes in Eingriff gebracht werden, so dass der Trennkörper zwischen mehreren Wärmeabgabeelementen und/oder zwischen den Umbiegungen eines oder mehrerer, im Wesentlichen sinusförmiger Wärmeabgabeelemente verrastet.

Weitere Vorteile und Eigenschaften der Erfindung ergeben sich aus der nachfolgenden Beschreibung eines Ausführungsbeispiels anhand der Zeichnung. Darin zeigt:
- Fig. 1: einen Längsschnitt durch eine Heizeinrichtung zum Erwärmen des Innenraums eines Kraftfahrzeugs mit getrennten Luftströmen;
- Fig. 2a: einen elektrischen Zusatz-Heizkörper mit einer Mehrzahl an lamellenartigen Wärmeabgabeelementen der Heizeinrichtung gemäß Fig. 1 mit aufgeschobenem Trennkörper in Seitenansicht;
- Fig. 2b: einen Schnitt entlang der Linie B-B in Fig. 2a;
- Fig. 3: eine perspektivische Ansicht des Zusatz-Heizkörpers mit auf die lamellenartigen Wärmeabgabeelemente aufgeschobenem Trennkörper und einem Halteteil zum Aufnehmen desselben;
- Fig. 4a: eine Draufsicht auf den Trennkörper; und
- Fig. 4b: einen Schnitt entlang der Linie B-B in Fig. 4a.

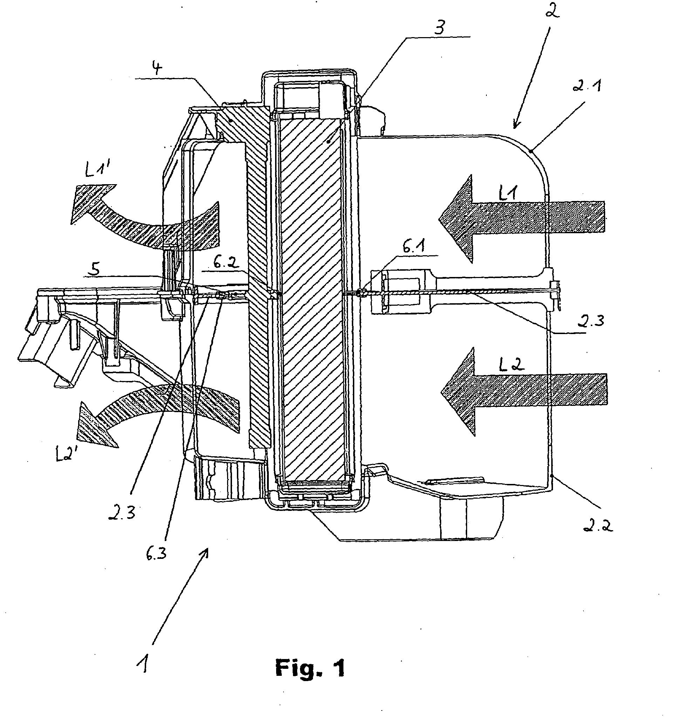

Die Fig. 1 zeigt im Längsschnitt eine Heizeinrichtung 1 zum Beheizen des Innenraums eines Kraftfahrzeugs. Die Heizeinrichtung 1 weist gemäß dem gezeigten Ausführungsbeispiel ein Gehäuse 2 mit einem Gehäuseoberteil 2.1 und einem Gehäuseunterteil 2.2 auf, das weiterhin eine Zwischenwand 2.3 für eine getrennte Luftführung (Pfeile L1, L2) besitzt.

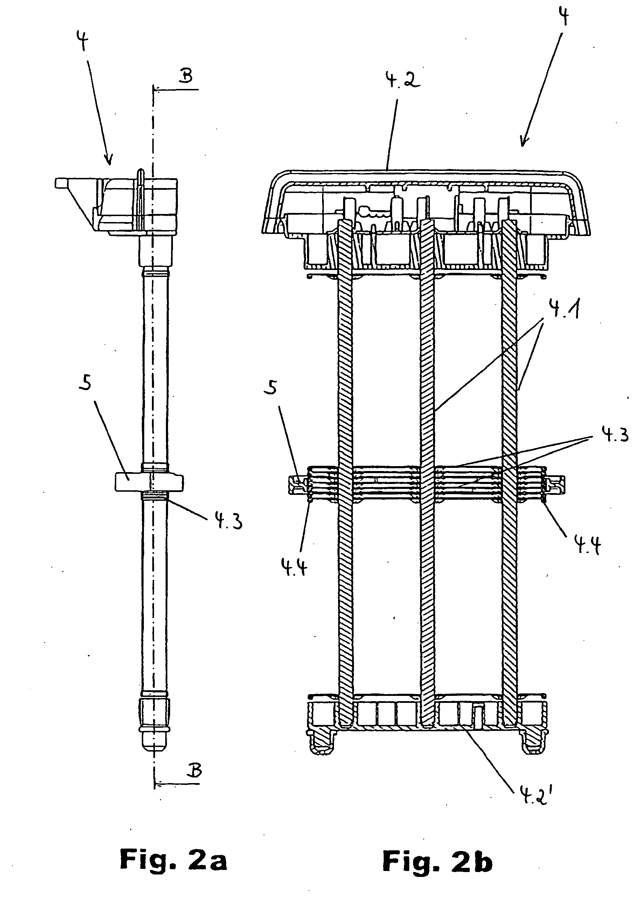

Zum Erwärmen der Luftströme L1, L2 ist zunächst ein Wärmetauscher 3 vorgesehen, der mit dem Kühlwasserkreis des betreffenden Kraftfahrzeugs verbunden ist. Stromabwärts des Wärmetauschers 3 ist ein elektrischer Zusatz-Heizkörper 4 in Form eines PTC-Heizers angeordnet, auf welchem klemmend und in paralleler Reihung eine Mehrzahl an lamellenartigen Wärmeabgabeelementen sitzen und der nachfolgend anhand der Fig. 2a, b noch genauer beschrieben wird.

Auf den mit den Wärmeabgabeelementen bestückten Zusatz-Heizkörper 4 ist erfindungsgemäß, wie in der Fig. 1 gezeigt, ein Trennkörper 5 aufgeschoben. Der Trennkörper 5 dient stromabwärts des Heizkörpers 4 zum Aufrechterhalten der getrennten Luftführung L1', L2', beispielsweise zum getrennten, unabhängigen Beheizen eines Fahrer- und eines Beifahrerbereichs im Kraftfahrzeug. Hierzu sind des Weiteren in den Kontaktbereichen zwischen der Zwischenplatte 2.3 und dem Wärmetauscher 3, dem Trennkörper 5 und dem Wärmetauscher 3 sowie dem Trennkörper 5 und der Zwischenplatte 2.3 geeignete Dichtungen 6.1, 6.2, 6.3 vorgesehen.

Die Fig. 2a, b zeigen nochmals detailliert den Zusatz-Heizkörper 4 aus Fig. 1: Zunächst ist in der Fig. 2a der Zusatz-Heizkörper 4 mit aufgeschobenem Trennkörper 5 in Seitenansicht gezeigt. Wie insbesondere aus der Fig. 2b, die einen Schnitt entlang der Linie B-B in Fig. 2a darstellt, ersichtlich ist, weist der Heizkörper 4 eine Reihe von parallel angeordneten Profilrohren 4.1 auf, innerhalb derer elektrische PTC-Heizwiderstände (nicht gezeigt) zum Bereitstellen der Heizleistung des Heizkörpers 4 angeordnet sind. Die Profilrohre 4.1 sind an ihren Enden jeweils durch Anschluss-/Halteteile 4.2, 4.2' gehalten und zur Energieversorgung der PTC-Widerstände elektrisch kontaktiert.

Um die durch die PTC-Widerstände erzeugte Wärme von den Profilrohren 4.1 auf einen Luftstrom L1, L2 (Fig. 1) durch die Heizeinrichtung 1 bzw. den Heizkörper 4 übertragen zu können, sind auf den Profilrohren 4.1 eine Anzahl von Wärmeabgabeelementen in Form dünner Metalllamellen 4.3 angeordnet, von denen in den Fig. 2a, b aus Gründen der Übersichtlichkeit nur einige wenige explizit dargestellt sind. Die Lamellen 4.3 sind zueinander parallel angeordnet und weisen geeignete Durchbrüche auf, mit denen sie auf die Profilrohre 4.1 des Heizkörpers 4 aufgeschoben und klemmend gehalten sind. Insbesondere besitzen die Lamellen 4.3 gemäß der Fig. 2b an ihren Enden Einrollungen 4.4, durch die sie paarweise voneinander beabstandet gehalten sind.

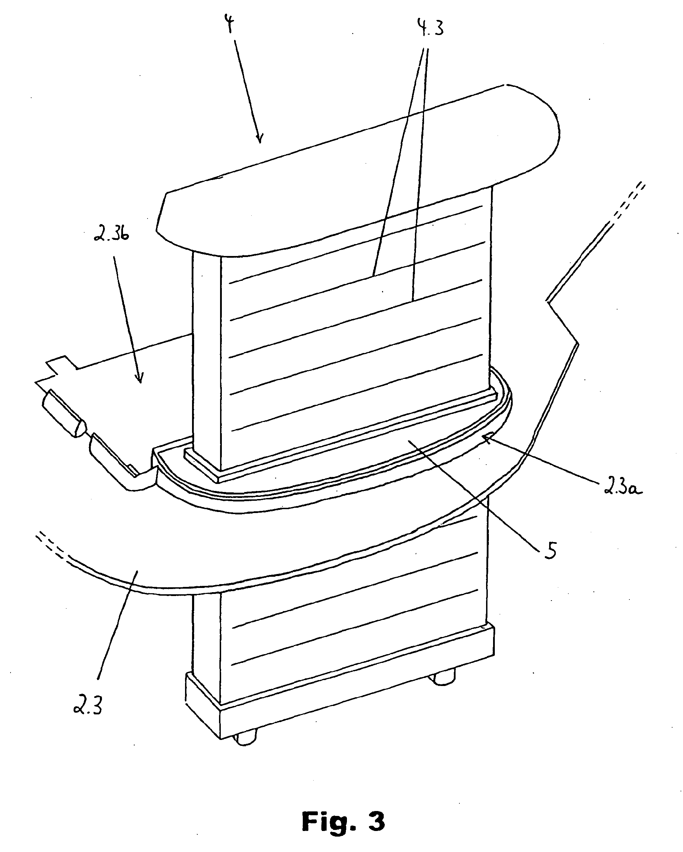

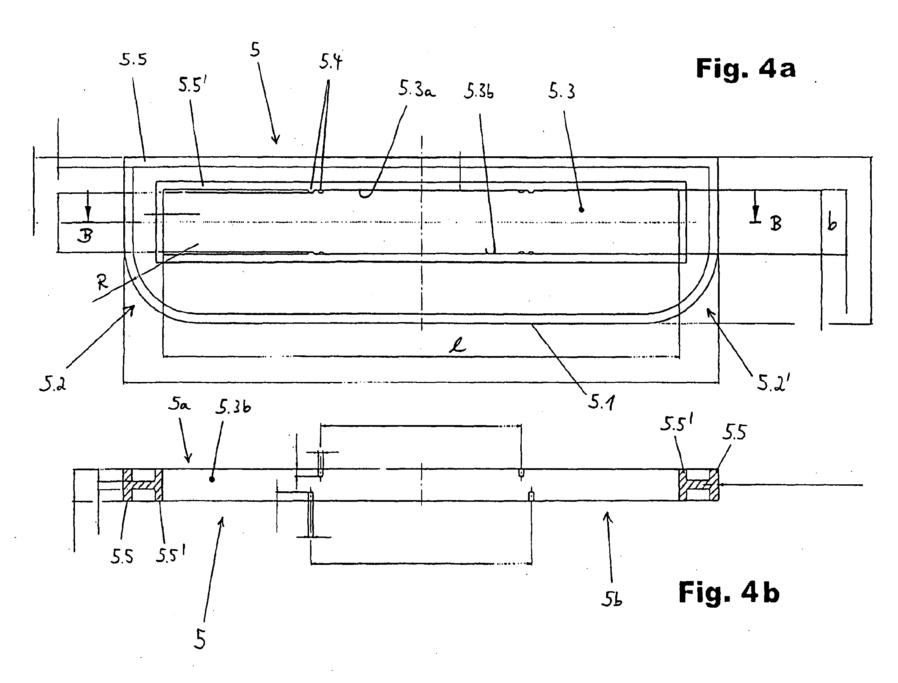

Der Trennkörper 5 weist - wie bereits aus den Fig. 2a, b erkennbar und weiter unten anhand der Fig. 3, 4a, 4b noch detailliert dargestellt - einen zentralen Durchbruch auf, mit dem er auf den Heizkörper 4, bzw. genauer: auf die Lamellen 4.3, aufgeschoben ist. Dies ist zunächst in der Fig. 3 in einer perspektivischen Ansicht schematisch dargestellt.

Die Fig. 3 zeigt den Heizkörper 4 mit auf dessen Lamellen 4.3 aufgeschobenem Trennkörper 5, der in eine entsprechende Aufnahme 2.3a in der Zwischenwand 2.3 (Fig. 1) des Gehäuses 2 der Heizeinrichtung 1 eingesetzt ist. Einige Lamellen 4.3 des Heizkörpers 4 sind exemplarisch angedeutet. Weiterhin ist in Fig. 3 in einem Bereich hinter dem Heizkörper 4 eine Aufnahme 2.3b für den Wärmetauscher 3 der Heizeinrichtung 1 vorgesehen (vgl. Fig. 1).

Wie bereits aus der Fig. 3 erkennbar, ist der Trennkörper 5 der erfindungsgemäßen Vorrichtung im Wesentlichen plattenförmig ausgebildet, wobei seine äußere Kontur der eines Rechtecks entlehnt ist, jedoch im Bereich einer Längsseite des Rechtecks zumindest an den Ecken einen abgerundeten Verlauf aufweist.

Eine mögliche erfindungsgemäße Ausbildung des Trennkörpers 4 ist abschließend in den Fig. 4a, b detailliert dargestellt:

Die Fig. 4a zeigt eine Draufsicht auf einen Trennkörper 5, der im Wesentlichen dem bereits in der Fig. 3 gezeigten Trennkörper entspricht. Der Trennkörper 5 ist seiner äußeren Kontur nach im Wesentlichen plattenförmig-rechteckig ausgebildet, wobei die seine Längsseite 5.1 definierenden Ecken 5.2, 5.2' mit einem Radius R abgerundet ausgebildet sind. Der Trennkörper 5 weist zum Aufschieben auf den mit den Lamellen 4.3 bestückten Heizkörper 4 (vgl. Fig. 3) einen zentralen Durchbruch 5.3 auf, der entsprechend den Abmessungen der Lamellen 4.3 des Heizkörpers 4 rechteckig und geeignet dimensioniert ausgebildet ist. Dabei entspricht eine Länge 1 und eine Breite b des Durchbruchs 5.3 im Wesentlichen entsprechenden Abmessungen der Lamellen 4.3. Der Durchbruch 5.3 liegt im vorliegenden Fall um seinen gesamten Umfang der Außenkontur mehrerer benachbart angeordneter Lamellen 4.3 ohne Zwischenschaltung von Dichtungen im Wesentlichen gasdicht an.

An zwei mit den Längsseiten der Lamellen 4.3 in Anlage tretenden Innenwänden 5.3a, 5.3b des Durchbruchs 5.3 weist der Trennkörper 5 ferner Vorsprünge 5.4 auf, die im aufgeschobenen Zustand des Trennkörpers in Zwischenräume zwischen den Lamellen 4.3 (vgl. Fig. 2b) eingreifen und so den Trennkörper gegen Verschieben in Richtung der Erstreckung der Profilrohre 4.1 des Heizkörpers 4 sichern.

Der Trennkörper 5 ist erfindungsgemäß vorzugsweise in einem flexiblen, temperaturbeständigen Kunststoffmaterial ausgebildet, so dass sich zum Aufschieben des Trennkörpers 5 durch Auseinanderziehen der Längsseiten 5.1 bzw. 5.3a, 5.3b eine lichte Breite des Durchbruchs 5.3 vergrößern lässt, um insbesondere die Vorsprünge 5.4 an den Lamellen 4.3 vorbei zu bewegen, bis sich der Trennkörper 5 in einer gewünschten Stellung auf den Lamellen 4.3 des Heizkörpers 4 befindet.

Wie bereits aus der Fig. 4a ersichtlich, weist der Trennkörper 5 zwei an seiner Außenkontur bzw. am Rande des Durchbruchs 5.3 zumindest teilweise parallel zueinander umlaufende Wülste 5.5, 5.5' auf, die nachfolgend anhand der Fig. 4b näher erläutert werden.

Die Fig. 4b zeigt einen Querschnitt durch den Trennkörper 5 entlang einer Linie B-B in Fig. 4a. Demnach weist der Trennkörper 5 ein umlaufendes, doppelt H-förmiges Querschnittsprofil auf, um so trotz der Ausbildung des Trennkörpers 5 in flexiblem Kunststoffmaterial und dem Vorsehen eines zentralen Durchbruchs 5.3 bei verringertem Materialaufwand eine stabile Ausgestaltung des Trennkörpers 5 zu erreichen. Aufgrund des H-förmigen Profils des Trennkörpers 5 existieren auf dessen Oberseite 5a und Unterseite 5b die bereits vorstehend beschriebenen Wülste 5.5, 5.5', die demgemäß durch die freien Enden der parallelen Schenkel des H-förmigen Profils gebildet sind.

Aufgrund seiner vorstehend beschriebenen Ausgestaltung lässt sich der Trennkörper 5 der erfindungsgemäßen Vorrichtung bei kostengünstiger Ausgestaltung einfach und sicher auf den Lamellen 4.3 eines Heizkörpers 4 montieren, wobei seine Position auf dem Heizkörper 4 durch Verschieben in Erstreckungsrichtung der Profilrohre 4.1 (vgl. Fig. 2b) grundsätzlich frei wählbar ist.

### Bezugszeichenliste

- 1: Heizeinrichtung
- 2: Gehäuse
- 2.1: Gehäuse-Oberteil
- 2.2: Gehäuse-Unterteil
- 2.3: Zwischenplatte
- 2.3a, 2.3b: Aufnahme
- 3: Wärmetauscher
- 4: Zusatz-Heizkörper
- 4.1: Profilrohr
- 4.2, 4.2': Anschluss-/Halteteil
- 4.3: Lamelle
- 4.4: Einrollung
- 5: Trennkörper
- 5a: Oberseite
- 5b: Unterseite
- 5.1: Längsseite
- 5.2, 5.2': Ecke
- 5.3: Durchbruch
- 5.3a, 5.3b: Innenwand
- 5.4: Vorsprung
- 5.5, 5.5': Wulst
- 6.1, 6.2, 6.3: Dichtung
- L1, L2, L1', L2': Luftstrom
- b: Breite
- 1: Länge
- R: Radius

## Patentansprüche

1. Heizvorrichtung (1), insbesondere zum Erwärmen des Innenraums eines Kraftfahrzeugs, mit mindestens einem Heizkörper und mit einem im Wesentlichen plattenförmigen Trennkörper (5) zum Trennen von Fluidströmen (L1, L2, L1', L2'), der einen Durchbruch (5.3) mit einer zum Aufschieben des Trennkörpers (5) auf den Heizkörper angepassten Kontur aufweist, **dadurch gekennzeichnet, dass** der Heizkörper (4) mit einer Mehrzahl an lamellenartigen Wärmeabgabeelementen (4.3) ausgerüstet ist und dass der Trennkörper (5) in einem Material ausgebildet ist, das eine ausreichende Flexibilität aufweist, um zumindest den Durchbruch (5.3) zum Aufschieben auf den mit den lamellenartigen Wärmeabgabeelementen (4.3) bestückten Heizkörper (4) reversibel weiten zu können, so dass der Trennkörper (5) anschließend im Klemmsitz auf den Wärmeabgabeelementen (4.3) gehalten ist.

2. Vorrichtung nach Anspruch 1, **dadurch gekennzeichnet, dass** eine Plattenebene des Trennkörpers (5) im aufgeschobenen Zustand im Wesentlichen senkrecht zur Erstreckungsrichtung des Heizkörpers (4) angeordnet ist.

3. Vorrichtung nach Anspruch 1 oder 2, **dadurch gekennzeichnet, dass** eine Plattenebene des Trennkörpers (5) im aufgeschobenen Zustand im Wesentlichen parallel zu einer Längskante einer Mehrzahl an Wärmeabgabeelementen (4.3), welche insbesondere im Wesentlichen parallel zueinander an wenigstens einem Rohr (4.1) des Heizkörpers (4) sitzen, oder senkrecht zur Ebene des sinusförmigen Verlaufs wenigstens eines im Wesentlichen sinusförmigen Wärmeabgabeelementes angeordnet ist.

4. Vorrichtung nach einem der Ansprüche 1 bis 3, **dadurch gekennzeichnet, dass** der Durchbruch (5.3) im Wesentlichen einer Länge und Breite der Wärmeabgabeelemente (4.3) entsprechende Abmessungen (l, b) aufweist.

5. Vorrichtung nach einem der Ansprüche 1 bis 4, **dadurch gekennzeichnet, dass** der Durchbruch (5.3) um seinen gesamten Umfang der Außenkontur der Wärmeabgabeelemente (4.3) im Wesentlichen gasdicht anliegt.

6. Vorrichtung nach einem der Ansprüche 1 bis 5, **dadurch gekennzeichnet, dass** der Trennkörper (5) in einem hitzebeständigen Material ausgebildet ist.

7. Vorrichtung nach einem der Ansprüche 1 bis 6, **dadurch gekennzeichnet, dass** der Trennkörper (5) in einem Kunststoffmaterial ausgebildet ist.

8. Vorrichtung nach einem der Ansprüche 1 bis 7 **dadurch gekennzeichnet, dass** der Trennkörper (5) zumindest im Bereich seines Durchbruchs (5.3) eine hinreichende Dikke aufweist, dass er mit wenigstens zwei benachbart angeordneten, lamellenartigen Wärmeabgabeelementen (4.3) oder mit wenigstens zwei benachbarten Umbiegungen wenigstens eines im Wesentlichen sinusförmigen, lamellenartigen Wärmeabgabeelementes in Kontakt steht.

9. Vorrichtung nach Anspruch 8, **dadurch gekennzeichnet, dass** der Trennkörper (5) zumindest im Bereich seines Durchbruchs (5.3) eine hinreichende Dicke aufweist, dass er mit wenigstens drei benachbart angeordneten, lamellenartigen Wärmeabgabeelementen (4.3) oder mit wenigstens drei benachbarten Umbiegungen wenigstens eines im Wesentlichen sinusförmigen, lamellenartigen Wärmeabgabeelementes in Kontakt steht.

10. Vorrichtung nach einem der Ansprüche 1 bis 9, **gekennzeichnet durch** an der den Durchbruch (5.3) definierenden Innenwand (5.3a, 5.3b) des Trennkörpers (5) angeordnete Vorsprünge (5.4), welche in den Zwischenraum zwischen wenigstens zwei benachbarten, im Wesentlichen parallel angeordneten, lamellenartigen Wärmeabgabeelementen (4.3) oder in den Zwischenraum zwischen wenigstens zwei benachbarten Umbiegungen wenigstens eines im Wesentlichen sinusförmigen, lamellenartigen Wärmeabgabeelementes in Eingriff bringbar sind.

11. Vorrichtung nach einem der Ansprüche 1 bis 10, **gekennzeichnet durch** Vorsprünge (5.4) an wenigstens einer sich parallel zu den Längskanten der Wärmeabgabeelemente (4.3) erstreckenden, den Durchbruch (5.3) definierenden Innenwand (5.3a, 5.3b) des Trennkörpers (5), die zum Halten des Trennkörpers (5) in einer Richtung senkrecht zur Ausrichtung der lamellenartigen Wärmeabgabeelemente (4.3) **durch** Eingreifen jeweils in einen Zwischenraum zwischen den Wärmeabgabeelementen (4.3) ausgebildet sind.

12. Vorrichtung nach einem der Ansprüche 1 bis 11, **dadurch gekennzeichnet, dass** der Trennkörper (5) stromabwärts einer weiteren Heizeinheit (3) der Heizeinrichtung (1), wie einem Wärmetauscher in Verbindung mit dem Kühlwasserkreis eines Kraftfahrzeugs, angeordnet ist.

13. Vorrichtung nach einem der Ansprüche 1 bis 12, **dadurch gekennzeichnet, dass** eine äußere Kontur des Trennkörpers (5) entsprechend einer Aufnahme (2.3a) in einem Halteteil (2.3) für den Trennkörper (5) und gegebenenfalls die weitere Heizeinheit (3) ausgebildet ist.

14. Vorrichtung nach einem der Ansprüche 1 bis 13, **dadurch gekennzeichnet, dass** eine äußere Kontur des Trennkörpers (5) im Wesentlichen rechteckig mit zwei abgerundeten, eine Längsseite des Kontur-Rechtecks definierenden Ecken (5.2, 5.2') ausgebildet ist.

15. Vorrichtung nach einem der Ansprüche 1 bis 14, **dadurch gekennzeichnet, dass** der Trennkörper (5) ein umlaufendes, doppelt H-förmiges Querschnittsprofil aufweist, dessen parallele Schenkel die äußere Kontur bzw. den Durchbruch (5.3) definierende Innenwände (5.3a, 5.3b) des Trennkörpers (5) bilden.

16. Verfahren zum Herstellen einer Heizeinrichtung (1), mit wenigstens einem Heizkörper (4), insbesondere zum Erwärmen des Innenraums eines Kraftfahrzeugs, wobei zum Trennen von Fluidströmen in ein im Wesentlichen plattenförmiger Trennkörper (5) mit einem Durchbruch (5.3) auf den mit den lamellenartigen Wärmeabgabeelementen (4.3) bestückten Heizkörper (4) aufgeschoben wird, dass der Heizkörper (4) mit einer Mehrzahl an lamellenartigen Wärmeabgabeelementen (4.3) ausgerüstet wird, **dadurch gekennzeichnet, dass** der Trennkörper (5) zum Aufschieben auf den mit den lamellenartigen Wärmeabgabelementen (4.3) bestückten Heizkörper (4) reversibel verformt wird, insbesondere durch Aufweiten seines Durchbruches (5.3).

17. Verfahren nach Anspruch 16, **dadurch gekennzeichnet, dass** der Trennkörper (5) derart auf den mit den lamellenartigen Wärmeabgabeelementen (4.3) bestückten Heizkörper (4) aufgeschoben wird, dass er im aufgeschobenen Zustand im Wesentlichen senkrecht zur Erstreckungsrichtung des Heizkörpers (4) angeordnet ist und/oder dass er sich mit seiner Plattenebene im Wesentlichen parallel zu den Längskanten der Wärmeabgabeelemente (4.3) erstreckt.

18. Verfahren nach einem der Ansprüche 16 bis 17, **dadurch gekennzeichnet, dass** Vorsprünge (5.4) an einer den Durchbruch (5.3) definierenden Innenwand (5.3a, 5.3b) des Trennkörpers (5) in den Zwischenraum zwischen wenigstens zwei benachbarten, im Wesentlichen parallel angeordneten, lamellenartigen Wärmeabgabeelementen (4.3) oder in den Zwischenraum zwischen wenigstens zwei benachbarten Umbiegungen wenigstens eines im Wesentlichen sinusförmigen, lamellenartigen Wärmeabgabeelementes in Eingriff gebracht werden.

## Claims

1. Heating apparatus (1), particularly for heating the interior of a motor vehicle, having at least one heater and having a substantially plate-like separator (5) for separating fluid flows (L1, L2, L1', L2'), having an opening (5.3) with a contour adapted to pushing the separator (5) onto the heater, **characterized in that** the heater (4) is equipped with a plurality of lamellar heat emission elements (4.3) and that the separator (5) is made from a material having an adequate flexibility to be able to reversibly widen at least the opening (5.3) for pushing onto the heater (4) equipped with the lamellar heat emission elements (4.3), so that the separator (5) is subsequently held in force fit on the heat emission elements (4.3).

2. Apparatus according to claim 1, wherein, in the pushed on state, a plate plane of the separator (5) is substantially perpendicular to the extension direction of the heater (4).

3. Apparatus according to claim 1 or 2, wherein, in the pushed on state, a plate plane of the separator (5) is substantially parallel to a longitudinal edge of a plurality of heat emission elements (4.3), which in particular are substantially parallel to one another and located on at least one tube (4.1) of the heater (4), or at least one substantially sinusoidal heat emission element is positioned perpendicular to the plane of the sinusoidal path.

4. Apparatus according to claim 1 to 3, wherein the opening (5.3) essentially has dimensions (l, b) corresponding to a length and width of the heat emission elements (4.3).

5. Apparatus according to claim 1 to 4, wherein around the circumference of the opening (5.3) it engages in substantially gas-tight manner with the outer contour of the heat emission elements (4.3).

6. Apparatus according to claim 1 to 5, wherein the separator (5) is made from a heat-resistant material.

7. Apparatus according to claim 1 to 6, wherein the separator (5) is constructed from a plastics material.

8. Apparatus according to claim 1 to 7, wherein, at least in the vicinity of its opening (5.3), the separator (5) has an adequate thickness for it to be in contact with at least two adjacent lamellar heat emission elements (4.3) or with at least two adjacent bend-backs of at least one substantially sinusoidal, lamellar heat emission element.

9. Apparatus according to claim 8, wherein, at least in the vicinity of its opening, the separator (5) has an adequate thickness for it to be in contact with at least three adjacent lamellar heat emission elements (4.3) or with at least three adjacent bend-backs of at least one substantially sinusoidal, lamellar heat emission element.

10. Apparatus according to claim 1 to 9, wherein by projections (5.4) located at the inner wall (5.3a, 5.3b) of the separator (5) defining the opening (5.3) and which can be engaged in the gap between at least two adjacent, substantially parallel lamellar heat emission elements (4.3) or in the gap between at least two adjacent bend-backs of at least one substantially sinusoidal, lamellar heat emission element.

11. Apparatus according to claim 1 to 10, wherein by projections (5.4) on at least one inner wall (5.3a, 5.3b) of the separator (5) defining the opening (5.3) and extending parallel to the longitudinal edges of the heat emission elements (4.3) and constructed for retaining the separator (5) in a direction perpendicular to the orientation of the lamellar heat emission elements (4.3) by in each case engaging in a gap between said heat emission elements.

12. Apparatus according to claim 1 to 11, wherein, downstream of a further heating unit (3) of the heating device (1), such as a heat exchanger, the separator is linked with the cooling water circuit of a motor vehicle.

13. Apparatus according to claim 1 to 12, wherein an outer contour of the separator (5) is constructed corresponding to a receptacle (2.3a) in a holding part (2.3) for the separator (5) and optionally the further heating unit (3).

14. Apparatus according to claim 1 to 13, wherein an outer contour of the separator (5) is constructed in substantially rectangular manner with two rounded angles defining a longitudinal side (5.2, 5.2') of the contour rectangle.

15. Apparatus according to claim 1 to 14, wherein the separator (5) has a circumferential, double H-shaped crosssectional profile, whose parallel sides form the outer contour or the opening-defining (5.3) inner walls (5.3a, 5.3b) of the separator (5).

16. Method for the manufacture of a heating device (1), having at least one heater (4), particularly for heating the interior of a motor vehicle, where for separating fluid flows in a substantially plate-like separator (4) with an opening (5.3) is pushed onto the heater (4) equipped with lamellar heat emission elements (4.3), **characterized in that** the heater (4) is equipped with a plurality of lamellar heat emission elements (4.3) and that the separator (4) is reversibly deformed, particularly by widening its opening (5.3) for pushing onto said heater (4) equipped with the lamellar heat emission elements (4.3).

17. Method according to claim 16, wherein the separator (5) is pushed onto the heater (4) equipped with the lamellar heat emission elements (4.3) in such a way that in the pushed on state it is substantially perpendicular to the extension direction of the heater (4) and/or that it extends with its plate plane substantially parallel to the longitudinal edges of the heat emission elements (4.3).

18. Method according to claim 16 to 17, wherein projections (5.4) on an inner wall (5.3a, 5.3b) of the separator (5) defining the opening (5.3) are engaged in the gap between at least two adjacent, substantially parallel lamellar heat emission elements (4.3) or in the gap between at least two adjacent bend-backs of at least one substantially sinusoidal, lamellar heat emission element.

## Revendications

1. Dispositif chauffant (1), notamment pour chauffer l'intérieur d'un véhicule, avec au moins un élément thermique et avec un corps de séparation (5) de forme essentiellement plate pour séparer des flux (L1, L2, L1', L2'), ledit corps possédant une percée (5.3) aux contours adaptés pour monter le corps de séparation (5) sur l'élément thermique, l'élément thermique (4) étant muni de plusieurs éléments de dissipation de la chaleur (4.3) en forme de lamelles, **caractérisé en ce que** le corps de séparation (5) est fabriqué dans un matériau offrant une flexibilité suffisante pour pouvoir élargir de façon réversible au moins la percée (5.3) permettant de le monter sur l'élément thermique (4) muni des éléments lamellaires de dissipation de la chaleur (4.3), de sorte que le corps de séparation (5) est ensuite maintenu serré sur les éléments de dissipation de la chaleur (4.3).

2. Dispositif selon la revendication 1, **caractérisé en ce qu'**un plan du corps de séparation (5), une fois celui-ci monté, est disposé de manière essentiellement perpendiculaire au sens dans lequel s'étend l'élément thermique (4).

3. Dispositif selon une des revendications 1 ou 2, **caractérisé en ce qu'**un plan du corps de séparation (5), une fois celui-ci monté, est disposé de façon essentiellement parallèle à un bord longitudinal de plusieurs éléments de dissipation de la chaleur (4.3), lesquels sont notamment essentiellement parallèles les uns aux autres à au moins un conduit (4,1) de l'élément thermique (4), ou perpendiculairement au plan de la courbe sinusoïdale d'au moins un élément de dissipation de la chaleur de forme essentiellement sinusoïdale.

4. Dispositif selon une des revendications 1 à 3, **caractérisé en ce que** la percée (5.3) présente des dimensions (1, b) essentiellement égales à une longueur et une largeur des éléments de dissipation de chaleur (4.3).

5. Dispositif selon une des revendications 1 à 4, **caractérisé en ce que** la percée (5.3) est essentiellement fermée sur toute la circonférence du contour extérieur des éléments de dissipation de chaleur (4.3).

6. Dispositif selon une des revendications 1 à 5, **caractérisé en ce que** le corps de séparation (5) est réalisé dans un matériau résistant à la chaleur.

7. Dispositif selon une des revendications 1 à 6, **caractérisé en ce que** le corps de séparation (5) est réalisé dans un matériau plastique.

8. Dispositif selon une des revendications 1 à 7, **caractérisé en ce que** le corps de séparation (5) présente au moins au niveau de la percée (5.3) une épaisseur suffisante pour qu'il soit en contact avec au moins deux éléments lamellaires de dissipation de la chaleur (4.3) voisins, ou avec au moins deux courbures voisines d'au moins un élément lamellaire de dissipation de la chaleur de forme essentiellement sinusoïdale.

9. Dispositif selon la revendication 8, **caractérisé en ce que** le corps de séparation (5) présente au moins au niveau de la percée (5.3) une épaisseur suffisante pour qu'il soit en contact avec au moins trois éléments lamellaires de dissipation de la chaleur (4.3) voisins, ou avec au moins trois courbures voisines d'au moins un élément lamellaire de dissipation de la chaleur de forme essentiellement sinusoïdale.

10. Dispositif selon une des revendications 1 à 9, **caractérisé par** des porte-à-faux (5.4) disposés sur la paroi intérieure (5.3a, 5.3b) du corps de séparation (5) définissant la percée (5.3), lesdits porte-à-faux pouvant être mis en prise dans l'interstice entre au moins deux éléments lamellaires de dissipation de chaleur (4.3) voisins et essentiellement parallèles, ou dans l'interstice entre au moins deux courbures voisines d'au moins un élément lamellaire de dissipation de la chaleur de forme essentiellement sinusoïdale.

11. Dispositif selon une des revendications 1 à 10, **caractérisé par** des porte-à-faux (5.4) sur au moins une paroi intérieure (5.3a, 5.3b) du corps de séparation (5) s'étendant parallèlement aux bords longitudinaux des éléments de dissipation de la chaleur (4.3) et définissant la percée (5.3), lesdits porte-à-faux étant réalisés pour tenir le corps de séparation (5) dans une direction perpendiculairement à l'orientation des éléments lamellaires de dissipation de la chaleur (4.3) par engrènement dans chaque interstice entre les éléments de dissipation de la chaleur (4.3).

12. Dispositif selon une des revendications 1 à 11, **caractérisé en ce que** le corps de séparation (5) est disposé en aval d'une autre unité (3) du dispositif chauffant (1), tel un échangeur de chaleur en lien avec le circuit d'eau de refroidissement d'un véhicule.

13. Dispositif selon une des revendications 1 à 12, **caractérisé en ce qu'**un contour extérieur du corps de séparation (5) est formé conformément à un logement (2.3a) dans une pièce de retenue (2.3) pour le corps de séparation (5) et, le cas échéant, l'autre unité chauffante (3).

14. Dispositif selon une des revendications 1 à 13, **caractérisé en ce qu'**un contour extérieur du corps de séparation (5) est formé de façon essentiellement rectangulaire avec deux coins (5.2, 5.2') arrondis définissant un long côté du rectangle de contour.

15. Dispositif selon une des revendications 1 à 14, **caractérisé en ce que** le corps de séparation (5) présente une section de profil périphérique en forme de double H dont les branches parallèles constituent le contour extérieur ou les parois intérieures (5.3a, 5.3b) du corps de séparation (5) définissant la percée (5.3).

16. Procédé pour fabriquer un dispositif chauffant (1), avec au moins un élément thermique (4), notamment pour chauffer l'intérieur d'un véhicule, un corps de séparation (5) de forme essentiellement plate et muni d'une percée (5.3) étant monté pour séparer des flux sur l'élément thermique (4) muni d'éléments de dissipation de la chaleur (4.3) en forme de lamelles, **caractérisé en ce que** l'élément thermique (4) est équipé de plusieurs éléments de dissipation de la chaleur (4.3) en forme de lamelles, **caractérisé en ce que** le corps de séparation (5) est déformé de façon réversible afin de le monter sur l'élément thermique (4) muni des éléments lamellaires de dissipation de la chaleur (4.3), et notamment en élargissant la percée (5.3).

17. Procédé selon la revendication 16, **caractérisé en ce que** le corps de séparation (5) est monté sur l'élément thermique (4) muni des éléments lamellaires de dissipation de la chaleur (4.3) de telle sorte à être disposé, une fois monté, quasi perpendiculairement au sens dans lequel s'étend l'élément thermique (4) et/ou en s'étendant par son plan quasi parallèlement aux bords longitudinaux des éléments de dissipation de la chaleur (4.3).

18. Procédé selon une des revendications 16 à 17, **caractérisé en ce que** des porte-à-faux (5.4) sur une paroi intérieure (5.3a, 5.3b) du corps de séparation (5) définissant la percée (5.3) sont mis en prise dans l'interstice entre au moins deux éléments lamellaires de dissipation de chaleur (4.3) voisins et essentiellement parallèles, ou dans l'interstice entre au moins deux courbures voisines d'au moins un élément lamellaire de dissipation de la chaleur de forme essentiellement sinusoïdale.
